# EUROPÄISCHE PATENTSCHRIFT

(11) **EP 1 729 395 B1**
(45) Veröffentlichungstag und Bekanntmachung des Hinweises auf die Patenterteilung: **22.10.2008**
(21) Anmeldenummer: 05011670.6
(22) Anmeldetag: 31.05.2005
(51) Int. Cl.: H02K 1/27

(54) **Rotor für eine elektrische Maschine**
Rotor for an electric machine
Rotor pour machine électrique

(43) Veröffentlichungstag der Anmeldung: 06.12.2006
(73) Patentinhaber: ZF Friedrichshafen AG, 88046 Friedrichshafen (DE)
(72) Erfinder: Büttner, Hubertus, 97688 Bad Kissingen (DE); van Heyden, Marcus, 97456 Dittelbrunn (DE); Deutel, Markus, 97440 Werneck (DE); Vollmuth, Alfons, 97456 Dittelbrunn/Hambach (DE)

(56) Entgegenhaltungen:
- EP-A- 1 396 921
- EP-A- 1 503 485
- DE-A1- 10 040 978
- DE-A1- 10 226 572
- DE-A1- 19 943 050
- DE-B3- 10 228 224
- SU-A- 508 872

## Beschreibung

Die Erfindung betrifft einen Rotor für eine elektrische Maschine gemäß dem Oberbegriff des Patentanspruchs 1.

Derartige Rotoren weisen einen Rotorträger mit einem sich radial erstreckenden, scheibenförmigen Tragbereich und einem zylinderförmigen Tragbereich auf, an welchem ein Blechpaket aus lamellierten Elektroblechen angeordnet ist. Das Blechpaket kann eine Spulenwicklung oder eine Mehrzahl von Permanentmagneten tragen oder ohne weitere Elemente als Rotor einer Reluktanzmaschine fungieren und dabei einen magnetischen Fluss innerhalb des Rotors führen. Die Verbindung zwischen dem zylinderförmigen Tragbereich des Rotorträgers und dem Blechpaket erfolgt üblicherweise mittels Aufpressen, Kleben, Verstemmen oder mittels Schweißen, wie bspw. in der DE 102 26 572 A1 genannt.

Beim Betreiben der elektrischen Maschine ist ein Rotor extremen Kräften ausgesetzt; insbesondere können die dabei wirkenden Fliehkräfte bei einem topfförmigen und axial einseitig gelagerten Rotor zur Aufweitung der offenen Stirnseite führen. Bei großen Rotordurchmessern und/oder hohen Drehzahlen kann dabei eine Aufspreizung oder zumindest eine Lateralverschiebung von einzelnen Blechlamellen oder im Extremfall sogar das Auseinanderbrechen des Blechpakets erfolgen. Damit gehen gleichfalls verschiedenartige mechanische Schwingungsmoden des Rotors einher, die allein oder in Verbindung mit dadurch bedingten elektromagnetischen Kopplungserscheinungen zwischen Rotor und Stator von deutlich wahrnehmbaren, störenden Laufgeräuschen, wie z.B. einem schrillen Pfeifton, begleitet werden. Die nachteiligen Auswirkungen sind jedoch nicht nur auf die elektrische Maschine beschränkt, sondern betreffen ebenso mit dem Rotor in Wirkverbindung stehende Elemente, wie z.B. die Kurbelwelle und deren Lagerstellen bei einer aus einem Verbrennungsmotor und einem Elektromotor bestehenden Fahrzeugantriebseinheit, bei welcher der Rotor drehfest mit der Kurbelwelle verbunden ist. In diesem Fall können sich die infolge des periodisch auftretenden Verbrennungsvorgangs auftretenden Kurbelwellenschwingungen mit den Rotorschwingungen der elektrischen Maschine so überlagern, dass beide Aggregate in einen Resonanzzustand geraten und vorzeitig geschädigt werden und daraufhin wesentlich vor Ablauf der erwarteten Lebensdauer ausfallen können.

Um diesem bereits seit langem bekannten Problem entgegenzuwirken, ist es gängig, insbesondere einen topfförmigen Rotor insgesamt sehr massiv zu gestalten oder zumindest lokal, bevorzugt im Bereich der offenen Stirnseite, Verstärkungselemente vorzusehen, welches ein radiales Aufweiten verhindern sollen, wie bspw. ein dort ausgeführter Bund. Diese, dem Fachmann allgemein bekannten Maßnahmen lösen zwar einerseits das Problem durch eine höhere Festigkeit und durch eine Verschiebung der auftretenden Resonanzfrequenzen möglichst außerhalb des Nenndrehzahlbereichs, andererseits wird damit die Masse des Rotors und das Trägheitsmoment erheblich erhöht, was bei dem erwähnten Anwendungsbeispiel im allgemeinen nicht erwünscht ist.

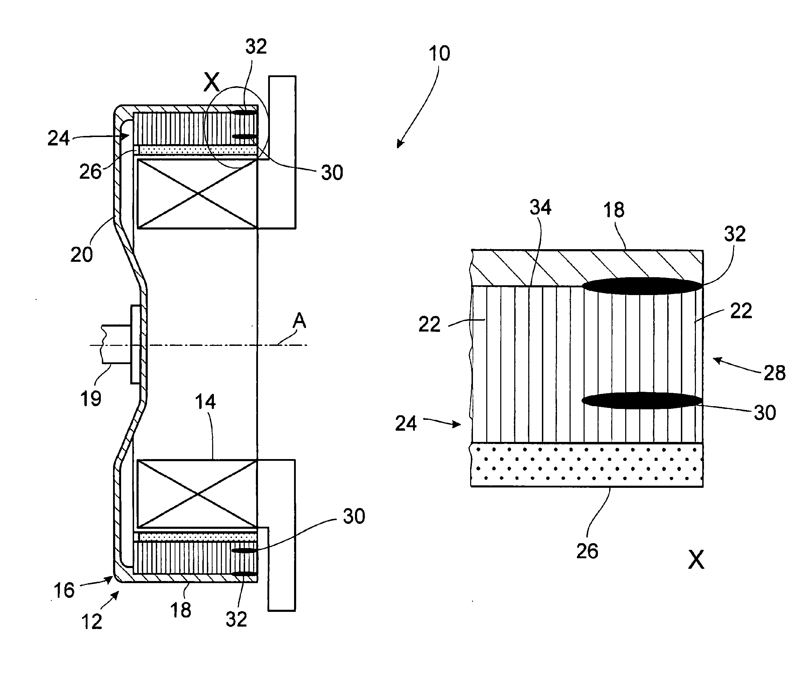

Das Dokument EP 1 503 485 A1 offenbart eine permanenterregte Synchronmaschine, deren Rotor einen zylinderförmigen Tragbereich und zu dessen Lagerung zwei endseitig an diesem angeordnete radiale Tragbereiche umfasst, wobei der zylinderförmige Tragbereich das Rotor-Blechpaket trägt. Bei dem in der Schrift in Fig. 5 dargestellten Außenläufer sind an der Außenumfangsfläche des Blechpakets zur gegenseitigen Verbindung der einzelnen Blechlamellen in Axialrichtung verlaufende Schweißnähte ausgebildet.

Die DE 100 40 978 A1 beschreibt eine Vorrichtung und ein Verfahren zur Herstellung von Blechpaketen für elektrische Maschinen, wobei die Verbindung zwischen den einzelnen Blechlamellen erzeugt wird, indem die Bleche in deren Stapelrichtung durchgeschweißt werden (verdeckte Schweißung).

Mit der SU 508872 ist ein Hysteresemotor mit einem Läufer bekannt geworden, dessen Blechpaket aus Lamellen eines hartmagnetischen Werkstoffs gebildet sind. Der dortigen Erfindung liegt die Aufgabe zugrunde, bei einem Rotor eines solchen Hysteresemotors die Herstellungstechnologie zu vereinfachen und den Wirkungsgrad zu erhöhen. Zu diesem Zweck wird vorgeschlagen, die Läuferbleche des Magnetleiters untereinander jeweils durch in Umfangsrichtung verteilte Schweißpunkte zu verbinden. Auf diese Weise werden innerhalb des Läuferpakets in Axialrichtung mehrere Schweißnähte ausgebildet, die die Stäbe einer Kurzschlusswicklung bilden und die über endseitig angeordnete Abschlussbleche elektrisch kurzgeschlossen werden.

Angaben über eine Tragestruktur für einen solchen Läufer und/oder über ein Verfahren zur Anordnung von einem solchen Läufer an einer Tragestruktur sind der Schrift nicht entnehmbar.

Davon ausgehend besteht die Aufgabe, einen gattungsgemäßen Rotor ohne zusätzliche Elemente zu versteifen, um die oben genannten nachteiligen Effekte zu reduzieren.

Die Erfindung löst die Aufgabe mit einem gattungsgemäßen Rotor, welcher zusätzlich die kennzeichnenden Merkmale des Hauptanspruchs aufweist.

Das Auffächern des Blechpakets und die gegenseitige Verschiebung einzelner Blechlamellen kann bei einem mit dem Rotorträger verbundenen Blechpaket wirksam verhindert werden, indem innerhalb der radialen Erstreckung des Blechpakets und abseits eines Verbindungsbereichs des Blechpakets mit dem zylinderförmigen Tragbereich eine erste Schweißnaht ausgebildet ist, welche eine Mehrzahl von Blechlamellen miteinander verbindet und indem gleichzeitig das Blechpaket mit dem zylinderförmigen Tragbereich des Rotorträgers unter Ausbildung einer zweiten Schweißnaht verbunden ist, deren axiale Erstreckung kleiner als die des Blechpakets ist.

Die erste Schweißnaht ist dabei vorzugsweise axial in das Blechpaket eingebracht und kann innerhalb dessen Volumenbereich oder an dessen freier Oberfläche ausgebildet sein. Gleichzeitig erlaubt die zweite Schweißnaht eine hochfeste sichere Fixierung des Blechpakets am Rotorträger.

Gemäß einer vorteilhaften Ausgestaltung der Erfindung kann eine Versteifung eines einseitig gelagerten Rotors, der nur einen radialen Tragbereich aufweist, besonders effektiv erfolgen, wenn die erste Schweißnaht an der dem radialen Tragbereich abgewandten Stirnseite am Blechpaket ausgeführt ist.

Es hat sich als günstig erwiesen, die erste Schweißnaht abseits der dem Verbindungsbereich abgewandten Oberfläche des Blechpakets auszuführen. Auf diese Weise wird die dem Rotorträger abgewandte Oberfläche des Blechpakets in ihrer Struktur und deren Eigenschaften nicht nachteilig beeinflusst, was insbesondere bei einer permanenterregten Synchronmaschine in den Aufnahmebereichen von Permanentmagneten eine exakt definierte Geometrie zulässt.

Mit besonderem Vorteil ist die erste Schweißnaht im Volumenbereich des Blechpakets mindestens 3 mm von der dem zylinderförmigen Tragbereich gegenüberliegenden Oberfläche ausgeführt. In dieser Tiefe weist das von der Statorwicklung im Rotorblechpaket induzierte elektrische Feld nur noch eine sehr geringe Stärke auf, wodurch die dort mittels der Schweißnaht elektrisch kurzgeschlossenen Blechlamellen lediglich eine vernachlässigbare Quelle für parasitäre Wirbelströme darstellen können, wodurch der Wirkungsgrad der elektrischen Maschine im Wesentlichen nicht beeinflusst wird.

Eine weitere Erhöhung der Festigkeit des Rotors kann erzielt werden, wenn die erste Schweißnaht in Umfangsrichtung des Blechpakets einen geschlossenen Ring bildet.

Wenn die erste und die zweite Schweißnaht jeweils mehrere, beiden Schweißnähten gemeinsame Blechlamellen miteinander verbinden, kann damit eine Festigkeit erreicht werden, die sonst bspw. nur mit einem zusätzlichen, masseerhöhenden Bundbereich oder einer ähnlichen Maßnahme erzielt werden kann. Auf diese Weise können unter Fliehkrafteinfluss die besonders am Rotorträger angreifenden Kräfte zumindest mittels des verschweißten Teils des Blechpakets aufgenommen und eine Aufweitung dauerhaft vermieden werden. Diese Ausgestaltung erlaubt es, den Rotorträger besonders gewichtssparend mit einem möglichst geringen Trägheitsmoment auszubilden.

Es hat sich herausgestellt, dass bereits relativ kurze zweite Schweißnähte mit einer axialen Erstreckung ab etwa 4 mm eine deutliche Versteifung des Rotors ergeben.

Als Verfahren zur Erzeugung der beiden Schweißnähte eignet sich in erster Linie ein Laser-Schweißverfahren. Die ausgezeichnete Fokussierbarkeit und die hohe Eindringtiefe eines Laserstrahls können in gewünschter Weise zur Erzeugung einer gewünschten schmalen und lokal eng begrenzten Schmelzzone ausgenutzt werden.

Nachfolgend wird die Erfindung unter Bezugnahme auf die beiliegende schematische Darstellung beispielhaft erläutert.

Die Figur zeigt eine Axialschnittdarstellung einer permanentmagneterregten Synchronmaschine 10 in Außenläuferbauart mit einem topfförmigen Rotor 12, der einen nur schematisch dargestellten Stator 14 umschließt und um diesen um eine Drehachse A rotieren kann. Der Rotor 12 weist einen als Umformteil aus einem relativ dünnwandigen Stahlblech gefertigten Rotorträger 16 mit einem sich axial zur Drehachse erstreckenden zylinderförmigen Tragbereich 18 und einen daran anschließenden zur Verbindung mit einer Welle 19 vorgesehenen radialen Tragbereich 20 auf. Der zylinderförmige Tragbereich 18 nimmt in dessen Innenbereich ein in bekannter Weise aus einer Vielzahl von Blechlamellen 22 stanzpaketiertes Blechpaket 24 auf, das an dessen Innenumfangsfläche eine Mehrzahl von Permanentmagneten 26 trägt, welche beim Betreiben der elektrischen Maschine 10 mit dem Stator 14 in eine elektromagnetische Wechselwirkung treten können.

Die Verbindung des Blechpakets 24 mit dem Tragbereich 18 erfolgt zunächst in bekannter Weise durch Einpressen, Einschrumpfen, Einkleben oder dgl. Zur Erzielung einer besonders hochfesten und den dargestellten einseitig gelagerten Rotor 12 versteifenden Anordnung sind an der dem radialen Tragbereich 20 abgewandten Stirnseite 28 des Rotors 10 mittels einer Laserschweißverfahrens zwei in axialer Richtung über eine Länge von ca. 4-6mm verlaufende Schweißnähte 30, 32 ausgeführt. Eine erste abschnittweise oder bevorzugt geschlossene ringförmige Schweißnaht 30 verläuft innerhalb der radialen Erstreckung des Blechpakets 24 und abseits eines Verbindungsbereichs 34 des Blechpakets 24 mit dem zylinderförmigen Tragbereich 18 in einer Tiefe von etwa 3mm, durch welche eine Mehrzahl von Blechlamellen 22 miteinander verbunden werden.

Radial zu dieser Schweißnaht 30 beabstandet verläuft parallel dazu eine zweite Schweißnaht 32 etwa gleicher Tiefe, welche das Blechpaket 24 mit dem zylinderförmigen Tragbereich 18 des Rotorträgers 16 verbindet. Auch diese Schweißnaht 32 kann abschnittweise oder geschlossen über den gesamtem Umfang ausgebildet sein. Es ist zu erkennen, dass die erste 30 und die zweite Schweißnaht 32 jeweils mehrere, beiden Schweißnähten 30, 32 gemeinsame Blechlamellen 24 miteinander verbinden und somit die Festigkeit des Rotors 12 erhöhen.

### Bezugszeichenliste

- 10: elektrische Maschine
- 12.: Rotor
- 14: Stator
- 16: Rotorträger
- 18: zylinderförmigen-Tragbereich
- 19: Welle
- 20: radialer Tragbereich
- 22: Blechlamelle
- 24: Blechpaket
- 26: Permanentmagnet
- 28: Stirnseite
- 30: erste Schweißnaht
- 32: zweite Schweißnaht
- 34: Verbindungsbereich

## Patentansprüche

1. Rotor (12) für eine elektrische Maschine (10) mit einem Rotorträger (16) mit einem sich axial zur Drehachse des Rotors (12) erstreckenden zylinderförmigen Tragbereich (18), an dem ein Blechpaket (24) aus einer Vielzahl von Blechlamellen (22) angeordnet ist und mit einem sich an den zylinderförmigen Tragbereich (18) anschließenden radialen Tragbereich (20),
**dadurch gekennzeichnet,**
**dass** innerhalb der radialen Erstreckung des Blechpakets (24) und abseits eines Verbindungsbereichs (34) des Blechpakets (24) mit dem zylinderförmigen Tragbereich (18) eine erste Schweißnaht (30) ausgeführt ist und dass das Blechpaket (24) mit dem zylinderförmigen Tragbereich (18) des Rotorträgers (16) unter Ausbildung einer zweiten Schweißnaht (32) im Verbindungsbereich (34) verbunden ist, wobei die Schweißnähte (30,32) jeweils eine Mehrzahl von Blechlamellen (22) miteinander verbinden.

2. Rotor nach Anspruch 1,
**dadurch gekennzeichnet,**
**dass** die erste Schweißnaht (30) an der dem radialen Tragbereich (20) abgewandten Stirnseite (28) am Blechpaket (24) ausgeführt ist.

3. Rotor nach Anspruch 1 oder 2,
**dadurch gekennzeichnet,**
**dass** die erste Schweißnaht (30) abseits der dem Verbindungsbereich (34) abgewandten Oberfläche des Blechpakets (24) ausgeführt ist.

4. Rotor nach einem der Ansprüche 1 - 3,
**dadurch gekennzeichnet,**
**dass** die erste Schweißnaht (30) mindestens 3mm von der dem Rotorträger (16) gegenüberliegenden Oberfläche des Blechpakets (24) angeordnet ist.

5. Rotor nach einem der Ansprüche 1 - 4,
**dadurch gekennzeichnet,**
**dass** die erste Schweißnaht (30) in Umfangsrichtung einen geschlossenen Ring ausbildet.

6. Rotor nach einem der Ansprüche 1-5,
**dadurch gekennzeichnet,**
**dass** die erste (30) und die zweite Schweißnaht (32) jeweils mehrere, beiden Schweißnähten (30, 32) gemeinsame Blechlamellen (22) miteinander verbinden.

7. Rotor nach einem der Ansprüche 1- 6,
**dadurch gekennzeichnet,**
**dass** die zweite Schweißnaht (32) eine axiale Erstreckung von mindestens 4 mm aufweist.

8. Rotor nach einem der Ansprüche 1- 7,
**dadurch gekennzeichnet,**
**dass** zumindest die erste Schweißnaht (30) mittels eines Laserschweißverfahrens erzeugt wird.

## Claims

1. Rotor (12) for an electrical machine (10), having a rotor support (16) with a cylindrical supporting region (18) which extends axially in relation to the rotation axis of the rotor (12) and on which a laminated core (24) comprising a large number of sheet-metal laminates (22) is arranged, and with a radial supporting region (20) which adjoins the cylindrical supporting region (18),
**characterized**
**in that** a first weld seam (30) is produced within the radial extent of the laminated core (24) and remote from a connection region (34) of the laminated core (24) to the cylindrical supporting region (18), and in that the laminated core (24) is connected to the cylindrical supporting region (18) of the rotor support (16) so as to form a second weld seam (32) in the connection region (34), with the weld seams (30, 32) each connecting a plurality of sheet-matel laminates (22) to one another.

2. Rotor according to Claim 1,
**characterized**
**in that** the first weld seam (30) is produced on the laminated core (24) at the end face (28) which is averted from the radial supporting region (20).

3. Rotor according to Claim 1 or 2,
**characterized**
**in that** the first weld seam (30) is produced remote from that surface of the laminated core (24) which is averted from the connection region (34).

4. Rotor according to one of Claims 1-3,
**characterized**
**in that** the first weld seam (30) is arranged at least 3 mm from that surface of the laminated core (24) which is opposite the rotor support (16).

5. Rotor according to one of Claims 1-4,
**characterized**
**in that** the first weld seam (30) forms a closed ring in the circumferential direction.

6. Rotor according to one of Claims 1-5,
**characterized**
**in that** the first weld seam (30) and the second weld seam (32) each connect a plurality of sheet-metal laminates (22), which are common to the two weld seams (30, 32), to one another.

7. Rotor according to one of Claims 1-6,
**characterized**
**in that** the second weld seam (32) has an axial extent of at least 4 mm.

8. Rotor according to one of Claims 1-7,
**characterized**
**in that** at least the first weld seam (30) is generated by means of a laser welding process.

## Revendications

1. Rotor (12) pour une machine électrique (10) avec un porte-rotor (16) présentant une région de support (18) de forme cylindrique s'étendant axialement à l'axe de rotation du rotor (12), sur laquelle un paquet de tôles (24) composé d'une pluralité de lamelles de tôle (22) est disposé, et une région de support radiale (20) se raccordant à la région de support (18) de forme cylindrique, **caractérisé en ce qu'**un premier cordon de soudure (30) est exécuté à l'intérieur de l'extension radiale du paquet de tôles (24) et à l'écart d'une région d'assemblage (34) du paquet de tôles (24) avec la région de support de forme cylindrique (18), et **en ce que** le paquet de tôles (24) est assemblé à la région de support de forme cylindrique (18) du porte-rotor (16) en formant un deuxième cordon de soudure (32) dans la région d'assemblage (34), dans lequel les cordons de soudure (30, 32) assemblent chaque fois entre elles une pluralité de lamelles de tôle (22).

2. Rotor selon la revendication 1, **caractérisé en ce que** le premier cordon de soudure (30) est exécuté sur le paquet de tôles (24) sur le côté frontal (28) situé à l'opposé de la région de support radiale (20).

3. Rotor selon la revendication 1 ou 2, **caractérisé en ce que** le premier cordon de soudure (30) est exécuté à l'écart de la surface du paquet de tôles (24) située à l'opposé de la région d'assemblage (34).

4. Rotor selon l'une quelconque des revendications 1 à 3, **caractérisé en ce que** le premier cordon de soudure (30) est disposé à au moins 3 mm de la surface du paquet de tôles (24) opposée au porte-rotor (16).

5. Rotor selon l'une quelconque des revendications 1 à 4, **caractérisé en ce que** le premier cordon de soudure (30) forme un anneau fermé en direction périphérique.

6. Rotor selon l'une quelconque des revendications 1 à 5, **caractérisé en ce que** le premier (30) et le deuxième (32) cordons de soudure relient chaque fois les unes aux autres plusieurs lamelles de tôle (22) communes aux deux cordons de soudure (30, 32).

7. Rotor selon l'une quelconque des revendications 1 à 6, **caractérisé en ce que** le deuxième cordon de soudure (32) présente une extension axiale d'au moins 4 mm.

8. Rotor selon l'une quelconque des revendications 1 à 7, **caractérisé en ce qu'**au moins le premier cordon de soudure (30) est réalisé par un procédé de soudage au laser.
